# EUROPEAN PATENT SPECIFICATION

(11) **EP 4 254 201 B1**
(45) Date of publication and mention of the grant of the patent: **03.09.2025**
(21) Application number: 22165121.9
(22) Date of filing: 29.03.2022
(51) Int. Cl.: G06F 12/06, G06F 12/0886, G06F 12/0895, H03K 19/1776

(54) **DYNAMIC BUFFERS AND METHOD FOR DYNAMIC BUFFER ALLOCATION**
DYNAMISCHE PUFFER UND VERFAHREN ZUR DYNAMISCHEN PUFFERZUWEISUNG
TAMPONS DYNAMIQUES ET PROCÉDÉ D'ALLOCATION DYNAMIQUE DE TAMPONS

(43) Date of publication of application: 04.10.2023
(73) Proprietor: aiMotive Kft., 1025 Budapest (HU)
(72) Inventor: FEHÉR, Márton, 1025 Budapest (HU); NAGY, Gyula, 1114 Budapest (HU)
(74) Representative: Valvoda, Jakob

(56) References cited:
- US-A- 5 835 104
- US-A1- 2021 089 458
- US-B2- 9 390 354

## Description

### TECHNICAL FIELD

The disclosure relates to memory management, dynamic buffers, dynamic buffer allocation, and to dynamic buffer width allocation. In particular, the disclosure relates to a method for dynamic buffer width allocation and to a respective memory.

### BACKGROUND

A memory or a memory device is well-known in art as electronic components suitable for storing data. A memory device is used to store information for immediate use in an electronic device. A memory may store operations or instruction of computer programs or data values used by such operations or instructions. A memory device is typically implemented as semiconductor memory, where data is stored within memory cells built from transistors and other components on an integrated circuit. However, other physical memory architectures Memory devices may include volatile and/or non-volatile memory. Examples of volatile memory are dynamic random-access memory (DRAM) that may be used, for example, for primary storage, and static random-access memory (SRAM) that may be used, for example, as a CPU cache. Various types of memory may be used in personal computers, workstations, routers, peripheral equipment, hard disk, routers, or dedicated hardware, such as graphics hardware or AI accelerators, and the like.

Memory devices are typically organized into memory cells. Memory cells or other memory units may be grouped into words of fixed word length, for example, 1, 2, 4, 8, 16, 32, 64, 128 bits, and the like. Accordingly, each memory cell or memory unit may have a width that may be sufficient for accommodating the words of fixed word length, which may include control data, such as error correction codes and the like. Each stored word can be accessed by a binary address of a number of bits, making it possible to store multiple words in the memory device. Memory cells or memory units may also be arranged as one or more arrays that may be, for example, organized in rows and columns. A certain number of memory rows or columns may be used for storing corresponding bits of data. Other semiconductor memory devices exist that may use other groupings of memory cells and corresponding addressing schemes.

Memory devices typically have a fixed storage capacity that determines the number and size of data that can be stored in the memory device. This may be referred to as memory width. Electronic devices are typically provided with memory with a sufficient capacity or width. This capacity is initially determined to accommodate an expected number of words of a desired length. After deployment, the memory capacity of the electronic device is fixed.

Buffers or data buffers typically denote a region of a memory device that is used for the temporal storage of data. For example, buffers may be used to store the results of operations and to provide input for such operations. If the buffer uses the entire memory or memory device, the term buffer may be used to refer to the memory or the memory device. After set up, the buffer requires that the underlying memory device is in a full operational state to store and/or retrieve data. A buffer may have a width to indicate the number of bits that can be stored in the buffer.

Memory devices consume power during operation. This may involve power costs for refreshing individual memory cells or memory units or power costs for accessing the memory that may be proportional to the size of the memory and the number of reads or writes to the memory device.

US 2021/089458 A1 discloses a system with a memory unit, a first processing unit configured to write data into a memory region of the memory unit, a second processing unit configured to read data from the memory region, a first control unit configured to control the first processing unit's access to the memory unit and, and a second control unit configured to control the second processing unit's access to the memory unit. The second control unit may be configured to obtain, from the first control unit, a first memory address associated with a data writing process of the first processing unit, receive a read request from the second processing unit, the read request having an associated second memory address, and delay execution of the read request based on a comparison of the first memory address and the second memory address.

US 9,390,354 B2 discloses an approach for printing of a transformed image corresponding to a source image. The approach determines at least a first scale factor to upscale the source image to generate the transformed image, the first scale factor being at a first mathematical precision. The source image is enlarged along at least one edge of said source image edges and pixel data is copied along the source image edges into the enlarged area of the enlarged source image. The approach maps each pixel of the transformed image back to a corresponding pixel into the enlarged source image including the copied pixel data along the edge of the source image. The approach may determine a second scale factor, the second scale factor being at a second mathematical precision, wherein each pixel of the transformed image is mapped back to a corresponding pixel in the enlarged source image using the second scale factor.

### SUMMARY

For many electronic devices, power consumption is a main factor in product design. Reducing the size of memory may reduce power consumption. This may, however, lead to insufficient memory capacity that may limit operational capabilities of the electronic device. On the other hand, increasing the size of memory may increase power consumption.

Thus, there is a need in the art for further optimizing power consumption in memory devices.

The problem is solved by a method, at least one computer-readable medium, an apparatus, and a memory device as defined in the independent claims. Preferred embodiments are defined in the corresponding dependent claims.

The disclosure may provide approaches for dynamic memory or buffer allocation. More specifically, the disclosure may provide approaches for dynamic memory or buffer width allocation.

A first aspect of the disclosure provides a method for buffer allocation. More specifically, the method may be for dynamic buffer width allocation. The method comprises providing a memory with a plurality of memory slices, determining a buffer width for a set of arithmetic operations, allocating a number of memory slices of the plurality of memory slices, the number of memory slices forming a buffer having at least the determined buffer width, and performing the set of arithmetic operations using the buffer.

The memory may be configured as a number of memory cells or units, each capable of storing a bit, a number of bits, or one or more words of a particular length. One or more of the memory cells or units may be denoted as a memory slice. Thus, the memory may be organized or arranged as the plurality of memory slices. Each slice may have a slice width that indicates the number of bits that can be stored in the respective slice. For example, a memory slice may have a width of 1 and store 1 bit. This may represent a bitwise slicing of the memory. In another example, a memory slice may have a width of 2, 4, 8, 16, 32, 64 bits, and the like. Moreover, memory slices of a width that is not a power of 2 can be used. The slice width may be the same for all slices of the plurality of slices. The slice width may be different for at least one of the plurality of slices. Accordingly, a sum of the width of the allocated memory slices corresponds to the buffer width.

The arithmetic operations are used to determine the required buffer width. A type of the arithmetic operations, processed data, and result may be used to estimate a required buffer width. This is done dynamically and adapted to each new set of arithmetic operations that are to be performed using the buffer.

As a consequence, the size of the buffer is adapted to current arithmetic operations so that only memory slices that correspond to a determined width of the buffer are used during reads and/or writes, which significantly reduces the power costs. On the other hand, since the buffer size may be extended to all memory slices, the buffer may be dynamically adapted for a broad range of arithmetic operations, even, including arithmetic operations requiring a large buffer size.

In a preferred embodiment, the memory enables a selective activation and deactivation of at least some of the memory slices of the plurality of memory slices. The memory may include hardware components that may control and set a state of at least a part of the underlying memory cells or units. Each memory slice may be associated with at least one memory cell or unit. Accordingly, activating or deactivating a memory slice involves activating or deactivating the respective associated at least one memory cell or unit. The power consumption of the memory cells or units may differ depending on their state. In an active state, the memory cell or unit may consume more power than in a dormant or inactive state. Initially, at least some or all memory cells or units may be activated and switched to an operational state. As an alternative, the memory may be initialized by switching all or at least some of the memory cells or units to a dormant or inactive state. Preferably, if activated, individual memory cells or units that are not used for an allocated memory slice for the buffer may be selectively deactivated and switched to a dormant or inactive state. If required, inactive memory cells or units may be selectively activated if the associated memory slice has been allocated for the buffer. The selective activation (switching a respective cell or unit to an active state) and deactivation (switching a respective cell or unit to a dormant or inactive state) may be performed automatically when allocating or deallocating respective memory slices. Selective activation and deactivation of memory slices better adapt the power consumption of the memory to a required buffer width.

According to a particularly preferred embodiment, the method further comprises deactivating unallocated memory slices of the plurality of memory slices. The plurality of memory slices may be partitioned into the number of memory slices that are allocated for the buffer and a further number of memory slices that are not allocated for the buffer. The number of memory slices may be referred to as allocated memory slices. The further number of memory slices may be referred to as unallocated memory slices. Thus, the plurality of memory slices may consist of allocated memory slices and unallocated memory slices. However, it is to be understood that if all memory slices are allocated, the plurality of memory slices corresponds to the allocated memory slices. Each unallocated memory slice may be associated with at least one memory cell or unit. The associated at least one memory cell or unit of an unallocated memory slice may be deactivated and switched to a dormant or inactive state to reduce the amount of power consumption of the memory in silicon.

According to another embodiment, the buffer width is determined based on a word length of values processed by the set of arithmetic operations. The arithmetic operations may be analyzed or may include metadata or additional information that may define the word length. A word is a fixed-sized piece of data handled as a unit by arithmetic operations, such as instructions of an instruction set of a processor or the hardware of the processor. The word length indicates a number of bits in a word, such as 8, 16, 32, 64 bits, and the like. Yet, it is to be understood that the word length is not limited to a power of 2. Arithmetic operations for special-purpose processor designs, like digital signal processors, may operate on a word length ranging between, for example, 4 to 80 bits. The buffer width may be determined as a function with the word length as a parameter.

In yet another embodiment, the buffer width is determined based on a number of results of the set of arithmetic operations. The arithmetic operations may be analyzed or may include metadata or additional information that may indicate the number of results that are expected to be generated by the arithmetic operations. The number of results may correspond to a number of iterations. The buffer width may be determined as a function with the number of results as a parameter. Preferably, the function may also include the word length as a further parameter. For example, the analysis of the arithmetic operations and/or the metadata and/or the additional information, if available, may indicate that the arithmetic operations define a binary accumulator that accumulates integers with a word length of *Nᵢ* and that the binary accumulator accumulates up to M such integers. As an example, a required buffer width can be determined as *Nᵢ +* ceil(log₂ *M*) *+ t,* where t represents a safety margin.

According to another embodiment, the buffer width is determined based on statistic parameters related to input data processed by the set of arithmetic operations. The statistic parameters may indicate an input data type and/or distribution characteristics of the input data. The statistic parameters may include any further values describing statistics related to the input data. The buffer width may be determined as a function with the statistic parameters as one or more parameters. Preferably, the function may include the word length as a further parameter. Preferably, the function may include the number of results as a further parameter. Thus, the function may include parameters related to statistic parameters, word length, number of results, in any combination. For example, assuming a data type of two's complement signed input data of random values, a binary accumulator that accumulates up to M integers with a word length of *Nᵢ,* the buffer width may be estimated close to *Nᵢ.* A value that is "close" to a target value is to be understood in the context of the disclosure as a value that is a withing the range of the target value. This may be denoted using a threshold value, such that a distance between the close value and the target value is less than or equal to the threshold. Accordingly, given a safety margin (or threshold) t, the buffer width may be estimated as *Nᵢ + t*. With unsigned input data, however, the M accumulated random integers will utilize *Nᵢ + ceil*(log₂(*M*)) bits on average, as indicated above.

In a preferred embodiment, the method further comprises collecting the statistic parameters during the processing of the set of arithmetic operations in real-time. The statistic parameters may be based on an initial set of statistic parameters or statistic parameters that are available for the analysis. Values of currently processed input data may be monitored and used to modify or update previous statistic parameters. For example, monitored values could update a histogram or any other suitable data structure that could be used to estimate a distribution of the input data. During operation, a randomly distributed input data set may turn out to be a data set with a normal distribution. Updated statistic parameters may lead to a different estimation of a buffer width. Regarding the previous example of M accumulated random integers, utilization of the full buffer width of *Nᵢ* + ceil(log₂(*M*)) may only occur when both the number of accumulations is close to the maximum, and the input data are highly correlated. The buffer width may be adjusted based on the updated statistic parameters.

In a further embodiment, the method further comprises receiving the statistic parameters related to the input data. Prior to receiving the input data, the statistic parameters may be submitted as metadata or one or more parameters. Preferably, the statistic parameters are precalculated for the input data. This may be performed in a dedicated process during pre-processing and/or analyzing of the input data. For example, a host computing device may receive the input data, pre-process and/or analyze the input data and determine statistics related to the data set. The statistic parameters may be provided to respective processing hardware and/or memory to set-up and allocate the buffer for processing of the input data with the arithmetic operations.

According to a preferred embodiment, the method further comprises monitoring at least one value to be stored in the buffer, determining that the value exceeds a threshold, and dynamically allocating at least one further memory slice of the plurality of memory slices for the buffer. If the value exceeds the threshold, the at least one further memory slice may be dynamically allocated and assigned to the buffer. The further memory slice may be arranged in the buffer to store the highest bit(s) or most significant bit(s) (MSBs) of future values. However, it is to be understood that the buffer may be dynamically rearranged in a different manner, for example, according to a structure of the new set of allocated memory slices (including the old allocated slices and the further allocated slice) in hardware. The threshold may represent a maximum value or upper bound for values that can be safely stored in the buffer without risking a buffer overflow when the arithmetic operations continue processing. For example, the threshold maybe 50%, 60%, 70%, 80%, 90%, or 95% of the maximum value that can be stored in the buffer. It is to be understood that any other percentage of the maximum value can be used as a threshold, such as 67% or 85%. The buffer may also store a plurality of values, for example, an array of values. In this case, the threshold is adapted to the number of values to be stored in the array, and the values stored in the array in the buffer are monitored and compared to the threshold. For example, if the array is to store n integers, the threshold may be adapted to *t*/*n,* where t denotes the threshold used for the entire buffer. Similar to allocating further memory slices for the buffer, if a current value exceeds a threshold, a second threshold may be defined that may be used as a lower bound. If the current value stored in the buffer falls below the second threshold, at least one allocated memory slice may be deallocated from the buffer. The deallocated memory slice may represent a slice storing the highest bit(s) or the most significant bit(s) of values in the buffer. However, similar to the allocation of memory slices, a different memory slice may be deallocated, for example, based on hardware requirements. The deallocated memory slice (and the underlying memory cells or units) may be selectively deactivated and switched to a dormant or inactive state. This enables a highly dynamic allocation and deallocation of memory slices and an increased optimization of power consumption.

In one embodiment, the method may include determining a write-side word width and/or monitoring a read-side word width. The memory may provide write ports to write to the memory and/or to respective memory slices of the buffer. The memory may further provide read ports to read from memory and/or from respective memory slices of the buffer. The size of write data on the write-side may be continuously measured in real-time to determine the write-side word width. Likewise, the size of read data on the read-side may be continuously monitored to keep track of the read-side word width. This may be done by dedicated logic units on the write and read sides that may control respective write and read ports. The logic units may further communicate with an aux memory to store and/or retrieve configuration parameters and/or store and/or retrieve the measured or determined values. Both, the read-side word width and the write-side word width may be used to determine whether to allocate required memory slices and/or deallocate unused memory slices of the buffer.

According to another embodiment, the set of arithmetic operations includes a plurality of multiply-accumulate operations, wherein results of the plurality of multiply-accumulate operations are accumulated in the buffer. Multiply-accumulate operations include operations that enable the multiplication of two or more factors, wherein the products for several input data are accumulated to form a final result. These operations are well known in the art, for example, in scientific computing, graphics processing, and processing related to neural networks training or inference. If these operations are performed on dedicated hardware, such as GPUs or accelerator hardware for neural networks, it is particularly important to provide accumulator buffers with a suitable size that have an optimized consumption of power in silicon.

In a preferred embodiment, the plurality of multiply-accumulate operations includes multiplying a plurality of weights with input data, wherein the buffer width is determined based on values of the weights and an assumed maximum value for the input data. The multiply-accumulate operations may be configured to multiply a large amount of input data with a fixed set of weights. For example, the input data may represent different parts of an input channel of a layer of a neural network. Accordingly, a required buffer width may be estimated based on values of the fixed set of weights and statistics related to the input data, such as the assumed maximum value.

In a preferred embodiment, the method further comprises allocating a further number of memory slices of the plurality of memory slices for a further buffer. The method may further include determining a further buffer width and performing a further set of arithmetic operations using the further buffer. Accordingly, the memory may be used to provide a plurality of buffers that may be dynamically allocated. Each of the plurality of buffers may be assigned a respective plurality of memory slices of the memory according to the determined buffer width. During operation of the arithmetic operations, the respective values in the buffers may be monitored in order to determine whether further capacity is needed (thus, further memory slices are allocated for the respective buffer) or where the capacity of the buffer can be freed (thus, deallocating at least some of the memory slices of the respective buffer). Hence, further to an optimized utilization of the memory with reduced power consumption, the memory can be flexibly utilized even for greater demands. This provides a highly flexible memory architecture with reduced power consumption for various computational tasks.

A second aspect of the disclosure defines a computer-readable medium having instructions stored therein, wherein said instructions, in response to execution by a computing device, cause said computing device to perform a method according to any one of the preceding embodiments. In particular, the method may comprise providing a memory with a plurality of memory slices; determining a buffer width for a set of arithmetic operations; allocating a number of memory slices of the plurality of memory slices, the number of memory slices forming a buffer having at least the determined buffer width; and performing the set of arithmetic operations using the buffer.

However, it is to be understood that the computer-readable medium according to embodiments of the second aspect of the disclosure may store instructions that cause said computing device to perform method steps of any one of the embodiments of the first aspect of the disclosure, in any combination.

A third aspect of the disclosure defines an apparatus, comprising a memory with a plurality of memory slices; and at least one processing logic, the processing logic being configured to execute a method according to any one of the preceding embodiments of the first aspect, in order to configure the memory as a buffer and to perform a set of arithmetic operations using the buffer. In particular, the apparatus may comprise the memory with a plurality of memory slices; and the at least one processing logic that is configured to determine a buffer width for a set of arithmetic operations; allocate a number of memory slices of the plurality of memory slices, the number of memory slices forming a buffer having at least the determined buffer width, and perform the set of arithmetic operations using the buffer.

The processing logic may be any kind of hardware- and/or software-based logic that may be a programmable element capable of performing the above-mentioned method steps. The processing logic may be any kind of logical unit, such as FSM, combinatorial logic, look-up table, encoder/decoder, and the like. The processing logic may also be a processor, such as a general-purpose processor or a dedicated processor for particular tasks.

It is to be understood that embodiments of the apparatus according to the third aspect may include a configuration of the processor and/or of the memory according to features of an embodiment of the first aspect of the disclosure, in any combination. Preferable, the memory may be configured according to embodiments of the first aspect, and the processor may perform the configuration of the memory and execute the respective arithmetic operations on the allocated buffer in the memory. Moreover, the memory may include logic that may be used to configure the memory in order to provide the processor with a respective buffer without further configuration steps.

For example, as described with regard to embodiments of the first or second aspect, the processor may receive and process input data using the arithmetic operations and further analyze the input data to statistic parameters of the input data. This information may be either forwarded to logic in the memory to potentially adjust the buffer width, or may be further processed by the processor to dynamically adjust the buffer width and to communicate the new buffer width to the memory for dynamic allocation of the buffer, or this information may be forwarded to the logic and further processed by the processor. Thus, processing performed by the processor in one embodiment may at least partially be performed by the logic in the memory in another embodiment, and vice versa.

Yet another aspect of the disclosure specifies a dynamic memory, comprising a plurality of memory slices, each memory slice having a slice width; and logic configured to determine a buffer width for a set of arithmetic operations; and allocate a number of memory slices of the plurality of memory slices, the number of memory slices forming a buffer having at least the determined buffer width; and providing the buffer to perform the set of arithmetic operations using the buffer. Preferably, the logic may be configured to perform a method according to any one of the embodiments of the first aspect. Moreover, the dynamic memory may be a memory in the apparatus according to embodiments of the third aspect. In this case, the logic of the dynamic memory may communicate with the processor and provide a dynamic buffer for the apparatus.

In a preferred embodiment, the logic may be a processing unit that may be configured to execute the arithmetic operations. In this embodiment, the memory may be configured to receive the set of arithmetic operations from a host computing device.

In yet another embodiment, the logic may be configured to determine the buffer width and allocate the number of memory slices for the buffer, wherein the set of arithmetic operations is performed on a host computing device that uses the buffer.

Preferred embodiments of the dynamic memory may include structural features of the apparatus and/or functional features according to the first and third aspects of the disclosure, in any combination.

### BRIEF DESCRIPTION OF THE DRAWINGS

The specific features, aspects, and advantages of the disclosure will be better understood with regard to the following description and accompanying drawings where:
- Figure 1: shows a flowchart of a method according to an embodiment of the disclosure;
- Figure 2: shows a schematic layout of a memory according to an embodiment of the disclosure;
- Figure 3: shows a schematic layout of a memory according to an embodiment of the disclosure;
- Figure 4: shows details of an implementation of at least some parts of a memory according to an embodiment of the disclosure; and
- Figure 5: shows details of an implementation of at least some parts of a memory according to an embodiment of the disclosure.

### DETAILED DESCRIPTION

In the following description, reference is made to drawings which show by way of illustration various embodiments. Also, various embodiments will be described below by referring to several examples. It is to be understood that the embodiments may include changes in design and structure without departing from the scope of the claimed subject matter.

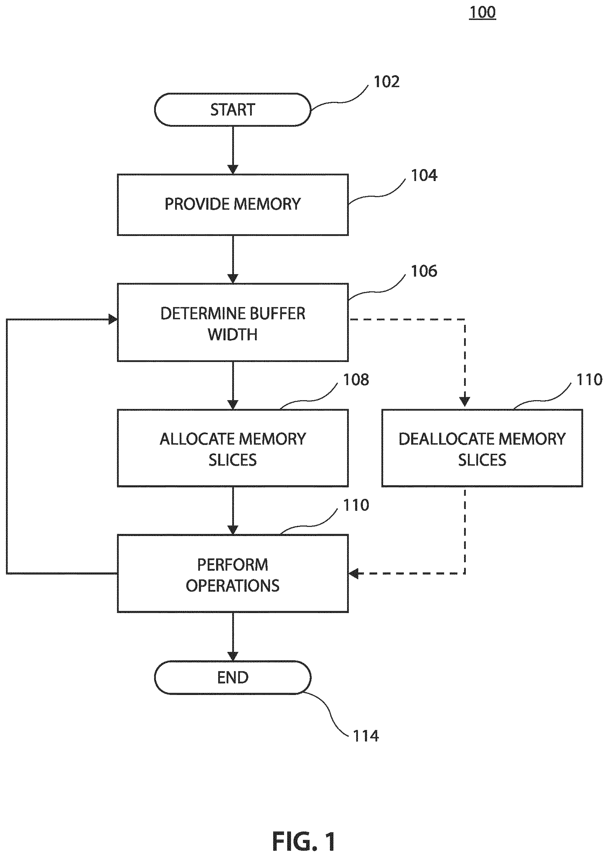

Figure 1 shows a flowchart of a method according to an embodiment of the disclosure. The method 100 may start in item 102. The method 100 may be a method for memory management, and/or for dynamic buffer allocation, and/or for dynamic buffer width allocation. In particular, the method 100 may relate to a method for dynamic buffer width allocation.

In item 104, a memory with a plurality of memory slices is provided. The memory may be configured in hardware as a number of memory cells or units, each capable of storing a bit, a number of bits, or one or more words of a particular length. For example, the memory may be a random-access memory, and the memory slices may represent a number of memory cells. At least some of the memory slices may be selectively activated or deactivated, which may cause activation or deactivation of the underlying memory cells.

The method 100 may proceed with determining a buffer width for a set of arithmetic operations in item 106. The buffer width may be determined based on one or more parameters that may include a word length of values of input data processed by the set of arithmetic operations, a number of results of the set of arithmetic operations, and/or statistic parameters related to the input data, in any combination. At least some of the parameters may be provided as metadata. For example, the method 100 may include receiving metadata, including the statistic parameters that are precalculated for the input data, for example, on a host system. Additionally, or as an alternative, the parameters may be updated in real-time based on currently processed values of input data and/or an operation flow of the arithmetic operations.

The arithmetic operations may include multiply-accumulate operations that multiply a plurality of weights with a plurality of input data. The results of the plurality of multiply-accumulate (MAC) operations may be accumulated in the buffer. Accordingly, the buffer width may be determined based on parameters related to the weights and parameters related to the input data. For example, if the rates are fixed, the buffer may be determined based on the values of the weights and statistic parameters for the input data, such as a maximum value of the input data.

In one example related to convolutional layers of neural networks used for computer vision, one data point or "pixel" of an output feature map of a convolutional layer can be the sum of thousands or tens of thousands of multiplication products. This may involve (Kernel[x] * Kernel[y] * InputChannel[i]) of MAC cycles. Preferably, partial sums (accumulations) are created every 10-100 multiplications. The processing logic, which may be dedicated hardware, general-purpose hardware, or software, or a combination thereof, may include parallel multipliers that produce parallel feature map data points (in X and Y dimensions). The parallel multipliers may receive the same weights but different parts of input channels at a time. Each parallel multiplier may have its respective buffer for its individual partial sum.

The buffer width may be determined to be capable of storing and fetching the partial sums. As an example, for 9-bit signed integer values, a multiplication may result in a 17-bit integer product, providing numerically maximum weight and input values. The result of the accumulation (before scaling down to, for example, INT8) may be 32-bit wide (no overflow with 100k+ maximum value products summed).

The memory may be partitioned into a plurality of memory slices with different sizes. For example, one memory slice representing 16 bits and a plurality of memory slices of 2 bits. To determine the buffer width, the absolute values of the weights may be accumulated, and a maximum input value may be estimated numerically. This may produce an upper bound width estimate for the current partial sum width used to set-up the buffer. It is likely that the buffer width will be a few bits lower in real life.

In item 108 of the method 100, a number of memory slices of the plurality of memory slices may be allocated (or activated). The number of memory slices constitutes the buffer with at least the determined buffer width. In the example mentioned above, the buffer may be configured to include the 16-bit slice and a number of the 2-bit slices required to accommodate the partial width value of the estimated size. For an estimated width of 24 bits, this may result in the following configuration 16 bit + 2 bit + 2 bit + 2 bit + 2 bit memory slices for the buffer. The magnitude of the above-mentioned weight accumulation result (useful bit count) can be applied as a memory slice activation.

Accordingly, embodiments of the present disclosure may represent a fully self-contained memory, wherein memory may represent a dynamic buffer or an array of dynamic buffers that behave functionally as a regular buffer or memory. After initial configuration, the self-contained memory will consume less power. The memory may determine a slice allocation based on input data or use a logic unit that can be integrated with the memory buffer or a host system. The logic unit may be any kind of logic unit or programmable element, such as a MAC cycle counter, as an example. As such, in one or more embodiments, the memory buffer does not require any pre-arrangement or pre-configuration for future operation or host/application intervention.

In item 110, the arithmetic operations, such as one or more of the above-mentioned MAC operations, are performed or executed using the buffer. The buffer, including the initial number of slices, can be used for a number of partial results, which calculate on different inputs but share the same weights, as mentioned above. During writes to the buffer, only the allocated (or activated) memory slices may be accessed.

The memory may further include an auxiliary buffer, such as an auxiliary buffer that may be a 4-bit wide or 8-bit wide auxiliary buffer or an auxiliary buffer of any other suitable or required width, wherein the auxiliary buffer may store a segment-pattern for each individual write. During reads, the auxiliary buffer is then read, and based on the output of the auxiliary buffer, only the relevant segments used for the writes may be accessed.

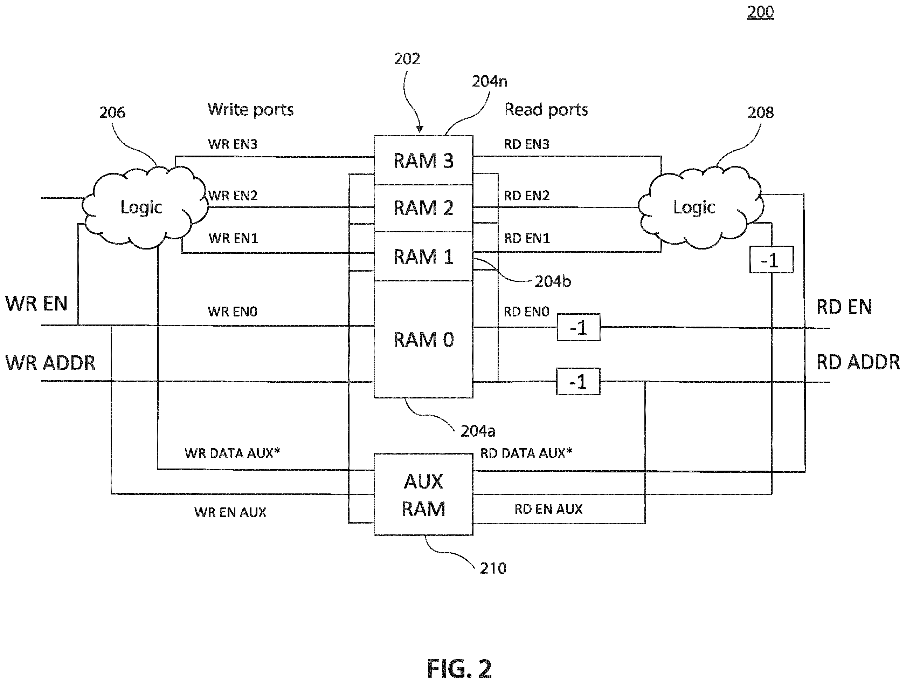

The memory may comprise a write side and a read side, as illustrated, for example, in Figure 2, where the write side includes write ports, and the read side includes read ports. Data is written into the memory slices on the write side. Similarly, data is read from the memory slices on the read side. In one or more embodiments, the buffer width on the write side of the memory may be determined, for example, using available metadata that may be provided in any suitable manner, such as a side-channel on the bus or buses containing the used bit number for each write or parallel writes, calculating the required buffer width for each buffer, such as logic checking the MSBs up until a useful bit is detected, or a combination thereof. Other approaches may be used. A theoretical upper bound may be approximated or estimated for an array of values written in the same cycle. This may include a safe/pessimistic technique that ensures that none of the values can utilize more bits than approximated. This upper bound may then be used for allocation of the memory slices of the memory. Accordingly, a compromise may be made between the power saving achieved, as a pessimistic data width is used, and between the implementation complexity and the power cost of the control logic.

Further to width consideration on the write side, embodiments may also configure the read side of the memory to access and read the necessary memory slices, i.e., the allocated memory slices only.

In one or more embodiments, neither the write nor the read access pattern may be random, and some correlation may be present between the values written to different addresses or memory slices of the buffer. For example, if address X is read, it may be assumed that reading will continue with X+1, X+2, ..., X+n, where n can be any suitable integer number, such as 15, or a different example upper bound of any arbitrary value, for a set of cycles. The address X may correspond to a particular memory slice. A memory slice may include one or more addresses. This may be further based on the assumption that the maximum data width difference between each address offset may be a maximum of 1, or a different suitable value. Based on this assumption, at least for some or all read cycles, the necessary information may be available to only access the memory slices, which actually store the written data. Using this technique, the data width that was written to a particular address can be approximated.

Complex control and respective further power consumption may be avoided in one or more embodiments by using the auxiliary buffer. The auxiliary buffer may have the same depth as the dynamic buffer or the array of the memory slices representing parallel dynamic buffers. The auxiliary buffer may contain an active slice pattern for each address that may be updated with each new write. During reads, the read address may be first used to access the content of the auxiliary buffer, including the slice pattern. With the slice pattern, the actual read may be issued to the dynamic buffer, but only on the required memory slices. This realizes further memory access power cost saving on the read cycles. This approach may be implemented in various ways, and the present disclosure is not limited to a particular implementation. One possible implementation may include a delay of the read access to the dynamic buffer by one clock cycle. Other implementations may depend on the integration environment that can be used to implement a read address look ahead mechanism.

Even though the auxiliary buffer results in further memory hardware that needs to be accessed in each active cycle to save power on memory accesses, this may still improve the overall power consumption. For example, in one embodiment with 4 memory slices with an example configuration of 20+4+4+4, as an example, the auxiliary buffer can be coded in two bits. The least-significant memory slice of 20 bits may always be active (or allocated). Assuming that a more significant memory slice can only be active (or allocated) if all least significant memory slices are active (or allocated) too, the three more significant 4-bit memory slices can be coded as four values. For example, if the average width of the data to be written in the buffer is 24 bits, i.e., the 20-bit memory slice and the subsequent 4-bit memory slice, by adding the 2 bit auxiliary buffer, only 26 bit width worth of memory will be accessed instead of 32 bits of all 4 memory slices. Thus, using an auxiliary buffer may represent a tradeoff between further memory hardware and power consumption by the addition control logic. For an implementation where an array of dynamic buffers are fed with similar data patterns simultaneously, the overhead generated by the auxiliary buffer can be even more negligible, as a single auxiliary buffer can serve for a large amount of dynamic buffers, such as tens or hundreds of dynamic buffers. Independent of determining which memory slices need to be active (or allocated) for a particular write into a particular address, the auxiliary buffer can realize a comparable saving on the read access.

In one or more embodiments, a segment pattern may be a bit vector, containing one bit for each memory slice. Preferably, those bits may be routed from a read port of the auxiliary buffer to the memory cell or unit of the particular memory slice and, for example, involved in an AND logic relation with a Read Enable input to the buffer. Accordingly, only those memory slices will read their data that have a set bit in the segment pattern. The segment pattern may be coded using a unary or thermometer code. Unary encoding or thermometer encoding is an entropy encoding that represents a natural number n with a sequence of n or (n-1) first symbols, such as 1 or 0, followed by a different symbol, such as a 0 or 1, respectively. For example, a unary code (or representation) of a natural number n may be n ones followed by a zero. The code could be padded to a required width. For example, the number 3 could be coded as '0111' or '1110' or '0001', and the like. A padded version of a unary code for the number 3 could be '0000111' and the like. Other representation exist, including other unary or thermometer codes, one-hot codes, or binary codes. For example, a one-hot code of the number 3 could be '000100'. The skilled person would understand that other encoding techniques and representations and codes could be used. Using thermometer encoding, the segment pattern may be effectively a temperature gauge coded memory slice enable signal.

In one or more embodiments, on the write side, the segment pattern may arrive at the buffer from a write logic measurement unit or any other suitable logic on the write side. From the write ports, the segment pattern may be written into the auxiliary buffer, and its bits may also be routed to the memory cell or unit of the particular memory slice and involved in an AND logic relation with the Write Enable input to the buffer. Accordingly, only those memory slices will be written with the input data that have a set bit in the segment pattern.

It is to be understood that the segment pattern may be implemented as a bit vector or in any other suitable manner. The segment pattern could also be referred to as a (memory) slice activation pattern. In one or more embodiments of the present disclosure, other encodings than the temperature (gauge) encoding could be used to reduce the auxiliary buffer width. This may require additional combinational logic to produce the memory slice-wise activation control bits. In a preferred embodiment, the auxiliary buffer may be as wide as the number of controllable segments that are in the buffer total word length.

During the execution of the arithmetic operations in item 110, the value or several values or all values stored in the buffer may be monitored, preferably in real-time or based on a number of clock cycles (after or before reaching a certain amount of clock cycles) or number of reads/writes (after or before reaching a certain amount of reads, writes, or reads and writes), in order to determine whether the size of the buffer is sufficiently large for storing future results of the arithmetic operations. Additionally, or as an alternative, the monitored value(s) may be used to determine whether the size of the buffer is too large and could be reduced. This may be done by determining whether the monitored value(s) exceed or fall below respective thresholds, which may indicate a potentially small buffer size. Thus, after execution of the arithmetic operations in item 110 or in parallel to the execution of the arithmetic operations, the method 100 may re-iterate item 106 in order to proceed with determining an expected buffer width in item 106. If more memory is needed, the method may proceed with item 108 to dynamically allocate (or activate) at least one further memory slice of the plurality of memory slices for the buffer.

Depending on the determined buffer width, in one or more embodiments, the method 100 may proceed with item 112, wherein one or more of the allocated memory slices of the plurality of memory slices may be deallocated (or deactivated). In the examples mentioned above, at least some of the more significant 2 bit or 4 bit memory slices of the buffer may be deallocated or deactivated. The method 100 may proceed with item 110.

It is to be understood that allocation (activation) and/or deallocation (deactivation) of memory slices in items 108 and 112 may be performed sequentially or in parallel to the execution of the operations in item 110. Also, the allocation and deallocation may be combined in a single step. Moreover, it is to be understood that deallocation in item 112 can be optional as indicated by the dashed line, since deallocation may require further logic and power consumption. Thus, embodiments that are directed at constant memory size or at an increase of memory size, deallocation can be omitted. Moreover, after performing steps 106 and 108, the method 100 may not loop back to item 16 during runtime, i.e. during the execution of the operations in step 110. Thus, the method 100 may pre-configure the dynamic buffer in items 106 and 108, and perform the operations in 110 before proceeding to item 114, where the method 100 may end.

Figure 2 shows a schematic layout of a memory according to an embodiment of the disclosure. The embodiment shown in Figure 2 depicts a simple dual port memory. However, it is to be understood that the principles may also be applied to any other memory layout, such as true dual-port, single port memories, and the like.

The memory 200 may define a buffer 202 that includes a plurality of memory slices 204a, 204b, ..., 204n. The width of the memory slices 204 may differ. For example, the memory slice 204a may have a first width, such as 16 bits. The memory slices 204b to 204n may have a second width that may be different from the first width, such as 2 bits or 4 bits. One or more of the memory slices 204b to 204n may also have further widths that may be different from the first, second, and/or any other width of memory slices. The memory 200 may include further memory slices (not shown) that may each have a different width or the same width and that are currently not allocated for the buffer 202. The memory 200 may further include a write logic 206 on a write side of the memory 200 and a read logic 208 on a read side of the memory 200. The write logic 206 may monitor and control write ports, denoted as WR ENi, that enable the writing of data into the buffer 202. The read logic 208 may monitor and control read ports, denoted as RD ENi, that enable reading of data from the buffer 202.

Write logic 206 and read logic 208 may also be used to update or retrieve a pattern in an auxiliary buffer 210, AUX RAM, using data lines, denoted as WR DATA AUX* and RD DATA AUX* in Figure 2. Similar to the embodiment of Figure 1, the auxiliary buffer 210 may store a segment pattern for writes and/or reads that denotes the allocated memory slices 204a, ... 204n. The pattern or the segment pattern may also be referred to as a (memory) slice activation pattern in one or more embodiments of the present disclosure.

An input to logic 206 may carry word-length information to the buffer 202 for an actual write cycle. This may be used to generate the segment pattern. In one or more embodiments, the input may be converted into temperature gauge encoded slice enable bits in the write side logic 206. The slice enable bits may then be involved in an AND relation with a current WR EN input value in the logic 206 in order to drive the memory slices' WR EN inputs individually.

Each WR ENi input may be functionally a single-bit, and a write may enable both the memory slices 204a, ..., 204n, and the auxiliary buffer 210 in parallel. The generated slice enable bits may also be routed out from the logic 206 to the write port of auxiliary buffer 210, to be stored in the auxiliary buffer 210 on WR EN assertion.

The auxiliary buffer 210 may receive the same write address WR ADDR that is also received by the memory slices 204a, ..., 204n. Accordingly, the auxiliary buffer 210 may store the word-length information or slice enable bits for at least one or for each address. Thus, the auxiliary buffer 210 may store the word-length information or slice enable bits for a reduced number of addresses, depending on implementation in one or more embodiments of the present disclosure.

On the read side of the memory 200 the read address RD ADDR and read enable RD EN connect to the read port of auxiliary buffer 210 directly. The segment enables bits may be read in a single clock cycle. The logic 208 on the read side may combine the read bits by an AND relation with the read enable and may drive the read enable for each memory slice 204a, ..., 204n individually.

Read address and enable bits may be delayed to the memory slices 204a, ..., 204n by a single cycle. This is indicated in Figure 2 by boxes denoted as "-1" on respective connections. Thus, respective signals are coherent with the slice read enables as generated by the logic 208, due to the 1-cycle read of the auxiliary buffer 210.

The read ports of the auxiliary buffer 210 may also be connected to the read output of the buffer 202 by a respective delay that depends on the read latency of the memory slices 24a, 204n. An external logic (not shown), such as a word-length reconstruction logic, may be used to generate the full-length data word from the read memory slices. The external logic may, for example, replicate the effective most-significant bit up to the most significant bit of the full word length to reconstruct the full word length. The effective most significant bit of each read may be the most significant bit of the highest index slice.

Additionally, or as an alternative, word-length control can be inside read side logic 208 of the buffer if the logic 208 is configured to receive the read data. In yet another implementation, the slice enables information out of the buffer can be used by subsequent stage processing the read data.

As mentioned above, the auxiliary buffer 210 may keep track of a data width on the read side. Moreover, the word width on the write side may be measured by logic 206 in real-time, which may be updated with the auxiliary buffer 210. The measured and monitored values may be used to determine or adjust the width of the buffer 202. In a preferred embodiment, logic 206 may receive metadata or parameters related to the write data to determine or adjust the width of the buffer 202. The parameters may include data width parameters that can be supplied for every clock cycle or might be updated between a number of accesses. The number of accesses may relate to similar width accesses that may be performed in bulk.

Each memory slice 204a, ..., 204n may receive separate read and write control (enable/read/write/address etc.). Read and write controls may be driven by real-time metadata, such as statistics that may be collected on input values, or precalculated and sent with each data, or precalculated and sent in bulk (one such statistic for many data). This set-up enables constantly keeping track of (or precalculating ) a utilized word length, which allocates only the required amount of memory slices for storing. This will save considerable power, as the rest of the memory slices of the memory 200 may remain disabled or idle. The auxiliary buffer 210 could be utilized to realize similar savings on the read side.

Accordingly, logic 206 and/or logic 208 may be used to monitor values stored in the buffer and monitor and/or update metadata that could be used for dynamically adjusting the size of the buffer 202, as described, for example, with regard to the embodiment of Figure 1.

Further referring to Figure 2 and as mentioned above, boxes denoted as "-1" may represent 1-cycle delays (register stages) placed on an actual signal. They are to let the auxiliary buffer 210 read first and then its read word-length value to be used as a subsequent read of the allocated (or activated) memory slices. Hence the schematic illustration as shown in Figure 2 assumes a 1-cycle read latency for the auxiliary buffer 210.

Figures 1 and 2 describe several ways to determine a required buffer width on the write side of the buffer 202, such as based on metadata readily available (like a side-channel on the bus or buses containing the used bit number for each write or parallel writes), calculating the required buffer width for each buffer (logic checking the most-significant bits up until useful bit is detected) and/or a combination of the two. For example, a theoretical upper bound may be approximated/estimated for an array of values written in the same cycle, with a safe/pessimistic technique that ensures that none of the values can utilize more bits than approximated. The upper bound may then be applied to an array of memory slices, making a compromise between an achieved power saving based on a pessimistic data width and the implementation complexity and the power cost of the control logic. Other approaches for determining a required buffer width may be used. These approaches can be advantageously applied on the write side, for example, using the logic 206.

Logic 206 may, for example, receive an extra 3 bit wide bus, with each bit representing an additional slice that needs to be active (or allocated) on top of slice 0, such as memory slice 204a. The logic 206 can process the input and control write enable or simple enable signals of individual memory slices 204b, ..., 204n in order to activate (or allocate) one or more of the additional memory slices 204b, ..., 204n. Furthermore, logic 206 may code a respective 3 bit value into 2 bits for the auxiliary buffer 210.

Alternatively or additionally, depending on circumstances or use cases, the logic 206 may receive the data that is to be written into the buffer 202 and determine on the fly a required slice combination. As before, logic 206 may control the individual "enable" signals for the memory slices 204a, ..., 204n, and encode the value for the auxiliary buffer 210.

In yet another preferred implementation, the logic 206 may represent an on-the-fly approximation logic, which extrapolates a maximum required bit width for an array of memory slices working in parallel. As before, logic 206 may control the individual "enable" signals for the memory slices 204a, ..., 204n, and encode the value for the auxiliary buffer 210.

The logic 208 on the read side may perform operations corresponding to the operations performed by logic 206 on the write side. The logic 208 may decode the content of the auxiliary buffer 210, which may be a decimal (or otherwise) coded content, restoring a slice access pattern for the particular read address. The logic 208 may control the timing and drive the individual to enable signals for the memory slices 204a, ..., 204n on the read side of the buffer 202. The logic 208 may also perform the word-length reconstruction.

Embodiments of the present disclosure may not require a particular addressing scheme as such. In one or more implementations, the dynamic memory 200 can be used just like a regular memory with arbitrary addressing. However, it is to be understood that embodiments may define an addressing scheme. For example, a typical addressing pattern may be used, and a typical data-width distribution and data-width pattern can be analyzed as a further parameter when configuring and implementing the dynamic buffer 202 of the memory 200 for a particular application or use case. This may be done in a pre-configuration phase to determine which control method and what slice configuration may yield the best results.

It is to be understood that either logic 206 or logic 208 can be optional and/or provided as one logic unit that may monitor values, parameters, and determine a suitable word width on the write side, the read side, and/or both sides. The memory 200, including the buffer 202 and preferably one or more of logic, such as logic 206 and/or logic 208, and the auxiliary buffer 210 may be configured to provide the functionality as described above with regard to Figure 1.

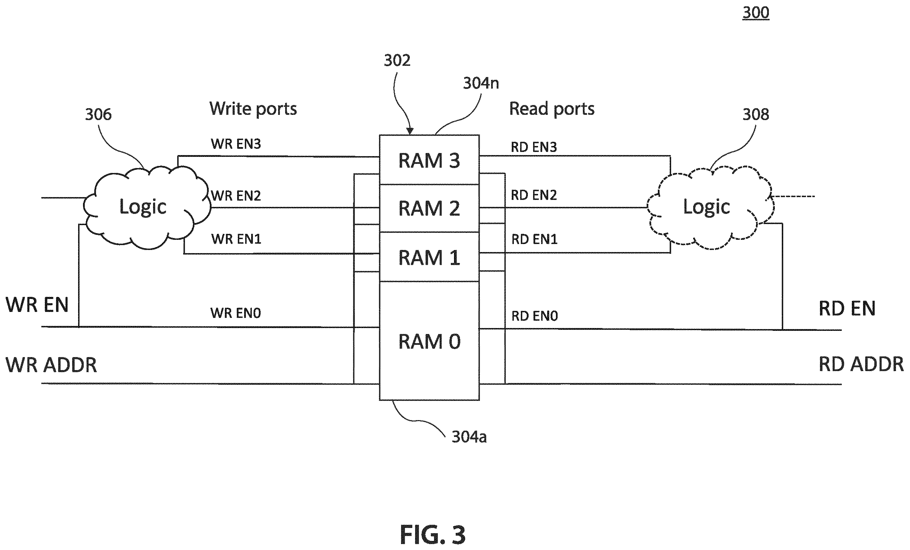

Figure 3 shows a schematic layout of a memory according to an embodiment of the disclosure. Similar to memory 200 of Figure 2, memory 300, as shown in Figure 3, may include a buffer 302 that includes a plurality of memory slices 304a, 304b, ..., 304n. The width of the memory slices 304 may differ as described above with regard to Figure 2. The memory 300 may include further memory slices (not shown) that are currently not allocated for the buffer 302. The memory 300 may further include a write logic 306. As indicated by the dashed line, the memory 300 may optionally include a read logic 306. The write logic 306 may monitor and control write ports that enable the writing of data into the buffer 302. The optional read logic 308 may monitor and control read ports that enable reading data from the buffer 302.

The word width on the write side may be measured by logic 306 in real-time . The measured and monitored values may be used to determine or adjust the width of the buffer 302. 302. If logic 308 is not provided in the memory 300, always the full width of the buffer 302 can be read. In a preferred embodiment, the memory 300 includes the logic 308, and logic 306 may receive parameters related to the write data to determine or adjust the width of the buffer. Accordingly, the reading of the data is controlled by logic 308.

Logic 306 and/or 308 may be configured similar to the embodiment of Figure 2. The logic 306 and/or logic 308 may be used to monitor values stored in the buffer and monitor and update metadata that could be used for dynamically adjusting the size of the buffer 302, as described, for example, with regard to the embodiments of Figure 1.

The memory 200, 300 according to embodiments of Figures 2 and 3, may represent a memory device or memory apparatus that may be provided as dedicated hardware or as a part of dedicated hardware that may be embedded, coupled, and/or connected to a host device (not shown).

The host device may be a general-purpose computing device or dedicated hardware, such as an accelerator. The host device may supply metadata and further information to set-up the buffer 202, 302 in memory 200, 300 and to write data to the memory 200, 300. The data may represent results of arithmetic operations as discussed above with regard to Figure 1. The arithmetic operations may be executed on the host device and/or in the dedicated hardware and/or on a logic unit (not shown) of the memory 200, 300.

By keeping track of the actual size of the data that needs to be stored, embodiments of the disclosure limit the power-cost on the silicon associated with storing and retrieving data to a minimum. This builds on the fact that buffers typically need to cater to a theoretical maximum-sized value, while in practice, this maximum - or sizes near to this maximum - are almost never reached in a lot of applications.

Embodiments of the disclosure could be based on the statistical distribution of sizes of numeric data (like different partial sums), especially compared to the maximum sum. This can be used to allocate memory slices or storage elements of memory and dynamically control them based on the current data size in order to save considerable power related to buffer access. Measurements reveal a power saving of up to 30-40% for a memory, according to embodiments of the disclosure.

For example, significant power cost savings can be achieved in CNN acceleration technology. Embodiments of the disclosure may be used in deep neural network training and/or inference. When performing a convolution, a single output value might be the result of tens of thousands of multiply-accumulate operations. This may result in a large number of accumulations, such as tens of thousands of accumulations. The (tens of thousands of) input data contributing to this singular output is, however also used to calculate other outputs. Accordingly, it is advisable to load chunks of input data and perform all calculations on them for all output data they contribute to. The partial results can be stored in the dynamic buffer with a width that is adjusted to the expected size of the results. This reduces the associated power costs of the buffer significantly.

However, it is to be understood that embodiments of the disclosure are not limited in this regard and may be advantageously used, for example, in graphics processing or scientific computing devices, units, and/or accelerators. Other areas may involve digital signal processing, video-, and audio encoding and decoding, blockchain technology, and the like.

Throughout this disclosure, the terms "word width" and "word length" may be used interchangeably as denoting a number of bits required to encode the word or data word. In order to store a word or data word with a particular word width or word length, the respective buffer or memory has to provide at least a buffer width or memory width capable of accommodating the number of bits of the word or data word.

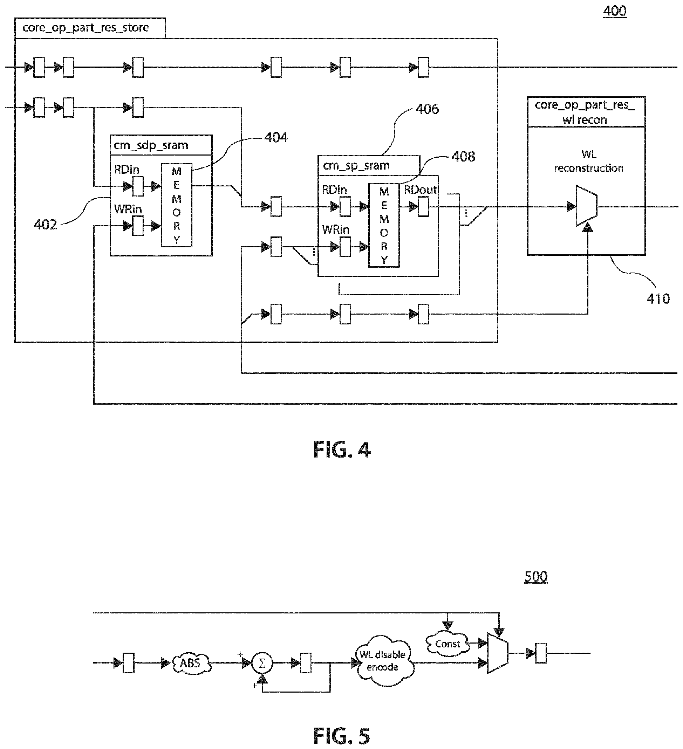

Figures 4 and 5 show details of an implementation of at least some parts or components of a memory according to respective embodiments of the present disclosure. Figures 4 and 5 may represent silicon implementations of parts of embodiments as discussed with regard to Figures 1, 2, and 3. Accordingly, one or more components depicted in Figures 4 and 5 may correspond to implementations of one or more components as shown in Figures 2 and 3, or may implement processing corresponding to one or more steps of the method as described with regard to Figure 1.

Figure 4 shows an implementation detail of a dynamic memory 400. At least some components of the dynamic memory 400 may correspond to components of the memory 200, as shown in Figure 2. In Figure 4, small vertical rectangles on the connections represent 1-cycle delays register stages.

The dynamic memory 400 may include circuitry 402 that may implement an auxiliary buffer, such as the auxiliary buffer 210, AUX RAM, in Figure 2. Circuitry 402 may include read ports RDin for loading data from a memory unit 404, and write ports WRin for storing data in the memory unit 404.

The dynamic memory 400 may further include circuitry 406 that may include one or more memory units 408 that may correspond to the memory slices 204a, ..., 204n of the buffer 202 of Figure 2. The circuitry 406 may include write ports WRin for storing data in the one or more memory units 408. The circuitry 406 may further include read ports RDin and RDout for loading data from the one or more memory units 408. Read ports RDin may receive a data pattern or bit vector, such as a slice-enable pattern, stored in the memory unit 404 to indicate active parts of the one or more memory units 408. Content of the active parts of the one or more memory units 408 are provided via read ports RDout.

The dynamic memory 400 may further include circuitry 410, which implements a word-length reconstruction (WL reconstruction) on the data read from the active one or more memory units 408 according to the slice-enable pattern provided by memory unit 404, in order to regenerate the full-length data word from read data. A fully self-contained implementation of the dynamic memory 400 presents itself as a memory with maximum data width on all of its ports.

Figure 5 shows an implementation detail of circuitry 500 applicable in one or more embodiments of the present disclosure. The circuitry 500 may implement a magnitude approximation by coefficient absolute value accumulation. Similar to Figure 4, small vertical rectangles on the connections in Figure 5 represent 1-cycle delays register stages.

The magnitude approximation may be performed in parallel with a MAC operation (not shown). Accordingly, a result of the MAC operation and the result of circuitry 500 that provides an approximated magnitude for the MAC operation may be fixed in a cycle-by-cycle timing relationship on the result side of the circuitry 500. Accordingly, operations implemented by circuitry 500 may represent a MAC coefficient absolute sum used for cycle-by-cycle buffer slice allocation in dynamic memory, such as memories 200 and 300, as described above with regard to Figures 2 and 3.

It is to be understood that the implementational details as provided in Figures 4 and 5 represent preferred examples. Other implementations using different components, circuitry, connections, and links can be used, and the present disclosure is not restricted by a particular implementation in silicon.

The techniques described herein may be implemented in various computing systems, examples of which are described in greater detail below. Such systems generally involve the use of suitably-configured computing devices implementing a number of modules, each providing one or more operations needed to complete the execution of such techniques. For example, each module may be implemented to provide the functionality of a method step according to an embodiment of the disclosure. Each module may be implemented in its own way; all need not be implemented the same way. As used herein, a module is a structural component of a system which performs an operational role, however, instantiated, which may be a portion of or an entire software element (e.g., a function of a process, a discrete process, or any other suitable embodiment). A module may comprise computer-executable instructions, and may be encoded on a computer storage medium. Modules may be executed in parallel or serially, as appropriate, and may pass information between one another using shared memory on the computer on which they are executing, using a message-passing protocol, or in any other suitable way. Exemplary modules are described below carrying out one or more tasks, though it should be appreciated that the modules and division of tasks described are merely illustrative of the type of modules that may implement the exemplary techniques described herein and that the invention is not limited to being implement in any specific number, division, or type of modules. In some implementations, all functionality may be implemented in a single module. Further, the modules are discussed below, for clarity, as all executing on a single computing device, though it should be appreciated that, in some implementations, the modules may be implemented on separate computing devices adapted to communicate with one another. For example, one computing device may be adapted to execute an identification module to identify available networks, and connection modules on other computing devices may retrieve information on available networks from the computing device prior to establishing a connection.

While some embodiments have been described in detail, it is to be understood that aspects of the disclosure can take many forms. In particular, the claimed subject matter may be practiced or implemented differently from the examples described, and the described features and characteristics may be practiced or implemented in any combination. The embodiments shown herein are intended to illustrate rather than to limit the invention as defined by the claims.

## Claims

1. A method for dynamic buffer width allocation, comprising:
providing (104) a memory with a plurality of memory slices;
determining (106) a buffer width for a set of arithmetic operations;
allocating (108) a number of memory slices of the plurality of memory slices, the number of memory slices forming a buffer having at least the determined buffer width; and
performing (110) the set of arithmetic operations using the buffer,
wherein the memory enables a selective activation and deactivation of at least some of the memory slices of the plurality of memory slices.

2. The method of claim 1, further comprising deactivating (110) unallocated memory slices of the plurality of memory slices.

3. The method according to any one of the preceding claims, wherein the buffer width is determined based on a word length of values processed by the set of arithmetic operations.

4. The method according to any one of the preceding claims, wherein the buffer width is determined based on a number of results of the set of arithmetic operations.

5. The method according to any one of the preceding claims, wherein the buffer width is determined based on statistic parameters related to input data processed by the set of arithmetic operations.

6. The method according to claim 5, further comprising collecting the statistic parameters during processing of the set of arithmetic operations in real time.

7. The method according to claim 5 or 6, further comprising receiving the statistic parameters related to the input data.

8. The method according to claim 7, wherein the statistic parameters are precalculated for the input data.

9. The method according to any one of the preceding claims, further comprising monitoring at least one value to be stored in the buffer, determining that the value exceeds a threshold, and dynamically allocating at least one further memory slice of the plurality of memory slices for the buffer.

10. The method according to any one of the preceding claims, wherein the set of arithmetic operations includes a plurality of multiply-accumulate operations, wherein results of the plurality of multiply-accumulate operations are accumulated in the buffer.

11. The method according to claim 10, wherein the plurality of multiply-accumulate operations include multiplying a plurality of weights with input data, wherein the buffer width is determined based on values of the weights and an assumed maximum value for the input data.

12. The method according to any one of the preceding claims, further comprising allocating a further number of memory slices of the plurality of memory slices for a further buffer.

13. A dynamic memory, comprising:
a plurality of memory slices, each memory slice having a slice width; and
logic configured to perform a method according to any one of the preceding claims.

14. An apparatus, comprising
a memory according to claim 13.

## Patentansprüche

1. Verfahren zur dynamischen Pufferbreitenzuweisung, umfassend:
Bereitstellen (104) eines Speichers mit einer Mehrzahl von Speichersegmenten;
Bestimmen (106) einer Pufferbreite für einen Satz von arithmetischen Operationen;
Zuweisen (108) einer Anzahl von Speichersegmenten aus der Mehrzahl von Speichersegmenten, wobei die Anzahl von Speichersegmenten einen Puffer bildet, der mindestens die bestimmte Pufferbreite aufweist; und
Durchführen (110) des Satzes von arithmetischen Operationen unter Verwendung des Puffers,
wobei der Speicher eine selektive Aktivierung und Deaktivierung von mindestens einigen der Speichersegmente aus der Mehrzahl von Speichersegmenten ermöglicht.

2. Verfahren nach Anspruch 1, ferner umfassend Deaktivieren (110) nicht zugewiesener Speichersegmente aus der Mehrzahl von Speichersegmenten.

3. Verfahren nach einem der vorhergehenden Ansprüche, wobei die Pufferbreite basierend auf einer Wortlänge von Werten bestimmt wird, die durch den Satz von arithmetischen Operationen verarbeitet werden.

4. Verfahren nach einem der vorhergehenden Ansprüche, wobei die Pufferbreite basierend auf einer Anzahl von Ergebnissen des Satzes von arithmetischen Operationen bestimmt wird.

5. Verfahren nach einem der vorhergehenden Ansprüche, wobei die Pufferbreite basierend auf statistischen Parametern bestimmt wird, die sich auf Eingabedaten beziehen, die durch den Satz von arithmetischen Operationen verarbeitet werden.

6. Verfahren nach Anspruch 5, ferner umfassend Sammeln der statistischen Parameter während der Verarbeitung des Satzes von arithmetischen Operationen in Echtzeit.

7. Verfahren nach Anspruch 5 oder 6, ferner umfassend Empfangen der statistischen Parameter, die sich auf die Eingabedaten beziehen.

8. Verfahren nach Anspruch 7, wobei die statistischen Parameter für die Eingabedaten vorberechnet werden.

9. Verfahren nach einem der vorhergehenden Ansprüche, ferner umfassend Überwachen von mindestens einem Wert, der in dem Puffer gespeichert werden soll, Bestimmen, dass der Wert einen Schwellenwert überschreitet, und dynamisches Zuweisen von mindestens einem weiteren Speichersegment aus der Mehrzahl von Speichersegmenten für den Puffer.

10. Verfahren nach einem der vorhergehenden Ansprüche, wobei der Satz von arithmetischen Operationen eine Mehrzahl von Multiply-Accumulate-Operationen aufweist, wobei Ergebnisse der Mehrzahl von Multiply-Accumulate-Operationen in dem Puffer akkumuliert werden.

11. Verfahren nach Anspruch 10, wobei die Mehrzahl von Multiply-Accumulate-Operationen ein Multiplizieren einer Mehrzahl von Gewichten mit Eingabedaten aufweist, wobei die Pufferbreite basierend auf Werten der Gewichte und einem angenommenen Maximalwert für die Eingabedaten bestimmt wird.

12. Verfahren nach einem der vorhergehenden Ansprüche, ferner umfassend Zuweisen einer weiteren Anzahl von Speichersegmenten aus der Mehrzahl von Speichersegmenten für einen weiteren Puffer.

13. Dynamischer Speicher, umfassend:
eine Mehrzahl von Speichersegmenten, wobei jedes Speichersegment eine Segmentbreite aufweist; und
Logik, die eingerichtet ist, ein Verfahren nach einem der vorhergehenden Ansprüche durchzuführen.

14. Vorrichtung, umfassend
einen Speicher nach Anspruch 13.

## Revendications

1. Procédé d'allocation dynamique de largeur de mémoire tampon, comprenant :
la fourniture (104) d'une mémoire avec une pluralité de tranches de mémoire ;
la détermination (106) d'une largeur de mémoire tampon pour un ensemble d'opérations arithmétiques ;
l'allocation (108) d'un nombre de tranches de mémoire de la pluralité de tranches de mémoire, le nombre de tranches de mémoire formant une mémoire tampon ayant au moins la largeur de mémoire tampon déterminée ; et
l'exécution (110) de l'ensemble d'opérations arithmétiques en utilisant la mémoire tampon,
dans lequel la mémoire permet une activation et une désactivation sélectives d'au moins certaines des tranches de mémoire de la pluralité de tranches de mémoire.

2. Procédé selon la revendication 1, comprenant en outre la désactivation (110) de tranches de mémoire non allouées de la pluralité de tranches de mémoire.

3. Procédé selon l'une quelconque des revendications précédentes, dans lequel la largeur de mémoire tampon est déterminée sur la base d'une longueur de mot de valeurs traitées par l'ensemble d'opérations arithmétiques.

4. Procédé selon l'une quelconque des revendications précédentes, dans lequel la largeur de mémoire tampon est déterminée sur la base d'un nombre de résultats de l'ensemble d'opérations arithmétiques.

5. Procédé selon l'une quelconque des revendications précédentes, dans lequel la largeur de mémoire tampon est déterminée sur la base de paramètres statistiques liés à des données d'entrée traitées par l'ensemble d'opérations arithmétiques.

6. Procédé selon la revendication 5, comprenant en outre la collecte des paramètres statistiques pendant le traitement de l'ensemble d'opérations arithmétiques en temps réel.

7. Procédé selon la revendication 5 ou 6, comprenant en outre la réception des paramètres statistiques liés aux données d'entrée.

8. Procédé selon la revendication 7, dans lequel les paramètres statistiques sont précalculés pour les données d'entrée.

9. Procédé selon l'une quelconque des revendications précédentes, comprenant en outre la surveillance d'au moins une valeur à stocker dans la mémoire tampon, la détermination que la valeur dépasse un seuil, et l'allocation dynamique d'au moins une tranche de mémoire supplémentaire de la pluralité de tranches de mémoire pour la mémoire tampon.

10. Procédé selon l'une quelconque des revendications précédentes, dans lequel l'ensemble d'opérations arithmétiques inclut une pluralité d'opérations de multiplication-accumulation, dans lequel des résultats de la pluralité d'opérations de multiplication-accumulation sont accumulés dans la mémoire tampon.

11. Procédé selon la revendication 10, dans lequel la pluralité d'opérations de multiplication-accumulation inclut la multiplication d'une pluralité de poids avec des données d'entrée, dans lequel la largeur de mémoire tampon est déterminée sur la base de valeurs des poids et d'une valeur maximale supposée pour les données d'entrée.

12. Procédé selon l'une quelconque des revendications précédentes, comprenant en outre l'allocation d'un nombre supplémentaire de tranches de mémoire de la pluralité de tranches de mémoire pour une mémoire tampon supplémentaire.

13. Mémoire dynamique, comprenant :
une pluralité de tranches de mémoire, chaque tranche de mémoire ayant une largeur de tranche ; et
une logique configurée pour effectuer un procédé selon l'une quelconque des revendications précédentes.

14. Appareil, comprenant
une mémoire selon la revendication 13.
